# EUROPEAN PATENT APPLICATION

(11) **EP 1 602 870 A1**
(43) Date of publication of application: **07.12.2005**
(21) Application number: 05253152.2
(22) Date of filing: 21.05.2005
(51) Int. Cl.: F16L 33/207

(54) **Tube to hose coupling**

(30) Priority: 02.06.2004 US 858778
(71) Applicant: T I Group Automotive Systems, L.L.C., Waren, Michigan 48090-2001 (US)
(72) Inventor: Brauckmiller, Ray, Clinton Township, Michigan 48036 (US); Nielson, John, Berkley, Michigan 48072 (US); Thrift, Charles, Farmington Hills, Michigan 48331 (US)
(74) Representative: Watts, Peter Graham

(57) **Abstract**

A hose coupling (10) comprises a metal tube (12), an insert (14), a ferrule (18) and a flexible hose (20). The metal tube (12) has a radially enlarged cylindrical housing (22). The insert (14) has a collar portion (30) and a barrel portion (32). The collar portion is located radially inward of the cylindrical housing (22). The ferrule (18) has a flange (42) and a sleeve (44). The flexible hose (20) is held within the sleeve (44) and is supported on the barrel portion (32).

## Description

### Background of the Invention

This invention relates to crimp-type tube-to-hose couplings and methods of making this type of coupling, with particular adaptation for vehicular air conditioning systems and similar sealed fluid conducting systems.

Hose couplings are generally made by deforming the end of a tube and then sliding the hose over the tube end form. The hose is then clamped or crimped with a radially inward force in order to create a seal between the inner surface of the hose and tube end form. This method is limited by the shapes which can be formed onto the end of the tube. It is also limited in that the tube end form will have the same or similar mechanical properties of the tube material from which it was formed.

An alternative method of making the hose coupling is to make a hose nipple from a different metal or alloy and then weld or braze this nipple to the end of the tube. This method overcomes some of the limitations of end-forming method. The shape of the nipple is not limited to end forming capabilities. Almost any shape can be machined onto the nipple. Metals and alloys can be chosen which have different and more desirable mechanical properties to resist the force of the hose crimping or clamping. One limitation of this process is that the nipple can be annealed during the brazing or welding process and can lose some of the desirable mechanical properties. Another limitation is that the nipple must be made from a material which is compatible to welding or brazing to the tube. This often means that the nipple is made from a very similar alloy to the tube (i.e. aluminum alloy nipple for aluminum alloy tube, steel alloy nipple for steel alloy tube).

A second alternative method of making the coupling is to use an insert located radially inward of a radially enlarged sleeve formed from the end of a tube. The tube and the insert can be formed from different alloys. A flexible hose is held within the sleeve and supported on the insert. In one crimping operation both the insert and hose may be secured to the metal tube. This method of using an insert to support a flexible hose is described in U.S. Patent No. 5,417,461 to Dougherty et al., which is assigned to the assignee of the present invention and the subject matter of which is hereby incorporated by reference. The present invention is an improvement over the coupling and the method of assembling the coupling disclosed in U.S. Patent No. 5,417,461.

### Brief Description of the Drawings

Fig. 1 is a cross-sectional view of a hose coupling in accordance of the present invention shown in its fully assembled state;

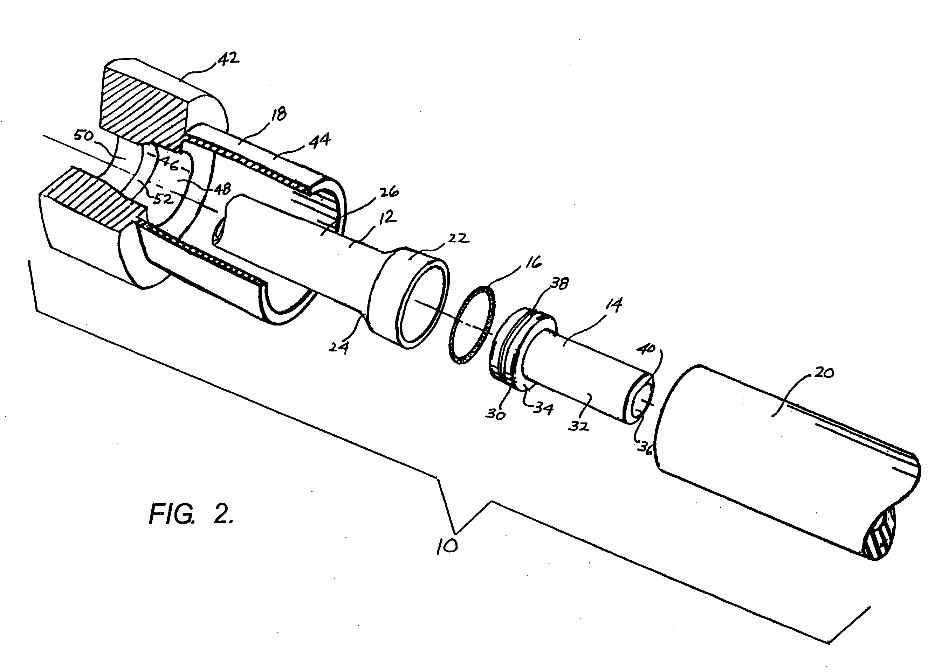

Fig. 2 is an exploded view of the hose coupling of the present invention as each of the components are to be assembled prior to the crimping operation;
Fig. 3 is a cross-sectional view of a first alternative embodiment of a hose coupling in accordance to the present invention;
Fig. 4 is a cross-sectional view of a second alternative embodiment of a hose coupling in accordance to the present invention;
Fig. 5 is a cross-sectional view of a third alternative embodiment of a hose coupling in accordance to the present invention;
Fig. 6 is a cross-sectional view of a fourth alternative embodiment of a hose coupling in accordance to the present invention; and
Fig. 7 is a cross-sectional view of a fifth alternative embodiment of a hose coupling in accordance to the present invention.

### Detailed Description of the Drawing

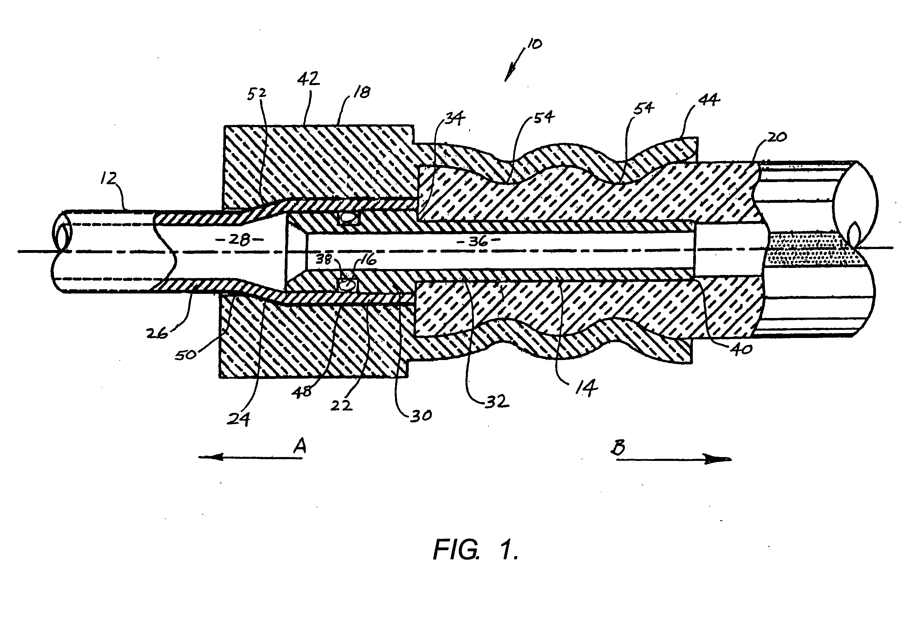

Referring now to Figure 1, an inventive coupling is illustrated in its fully assembled state. The coupling 10, when assembled as described in the greater detail below, forms a leak-proof joint having many fluid conveying applications, though particularly suited for use in a vehicular air conditioning system. The hose coupling 10 includes a tube 12, an insert 14, an O-ring 16, a ferrule 18 and a flexible hose 20.

The tube 12 has a radially enlarged cylindrical housing 22 formed at one end. A chamfered section 24 connects the non-enlarged tubular section 26 with the radially enlarged cylindrical housing 22. The tube 12 has a stepped axial bore 28 defined therein. The axial bore 28 of the tube 12 forms one end of a fluid flow path. The fluid can be in the liquid or vapor state. A suitable metal for forming the tube is aluminum alloy, such as 3000 Series aluminum.

The insert 14 has a collar portion 30, a barrel portion 32 and an annular shoulder 34 defining the junction of the collar portion 30 and the barrel portion 32. The insert 14 has an axial bore 36 defined therein. The axial bore 36 forms a portion of the fluid flow path connecting the flow path of the tube 12 with the flow path of the flexible hose 20. The outer diameter of the collar portion 30 is slightly larger than the inner diameter of the housing 22 allowing the collar portion 30 to be press fitted within the housing 22. The axial length of the collar portion 30 is approximately the same as the axial length of the housing 22. The outer surface of the collar portion 30 defines an annular groove 38 for retaining the O-ring 16. The barrel portion 32 of the insert 14 is cylindrical and extends axially from the collar portion 30. The tip 40 of the barrel portion 32 is tapered to allow the tip 40 to act as a pilot for locating the hose 20 during assembly. For the hose coupling to function properly, the insert 14 should be strong enough to endure the radial clamping force experienced during the crimping operation. In part, this criteria is met by a sufficient wall thickness. It is also met by material selection. Suitable metals for forming the insert 14 include, but not limited to, high strength aluminum and high strength steel.

The ferrule 18 has a cylindrical flange 42 and a sleeve 44 extending axially from one axial end surface of the flange 42. The flange 42 has a stepped bore 46 defined therein. The bore 46 includes a large diameter cylindrical section 48, a small diameter cylindrical section 50 and a chamfered section 52 connecting the small diameter cylindrical section 50 to the large diameter cylindrical section 48. The axial length of the large diameter cylindrical section 48 of the bore 46 is approximately the same as the axial length of the housing 22. The axial length of the chamfered section 52 of the bore 46 is approximately the same as the axial length of the chamfered section 24 of the tube 12. Likewise, the diameter of the large diameter cylindrical section 48 of the bore 46 is slightly larger than the outer diameter of the housing 22. The contour of the chamfered section 52 of the bore 46 is similar to the contour of the exterior surface of the chamfered section 24 of the tube 12. The diameter of the small diameter cylindrical section 50 of the bore 46 is slightly larger than the outer diameter of the non-enlarged tubular section 26 of the tube 12. Suitable metals for forming the ferrule 18 include, but not limited to, brass, aluminum alloy and steel. As illustrated in Figure 1, the sleeve 44 is radially spaced from the outer surface of the barrel portion 32. The flexible hose 20 occupies the space defined between the sleeve 44 and the barrel portion 32.

The insert 14 and the ferrule 18 may be formed from dissimilar metals, i.e. insert formed from steel and ferrule formed from brass. Alternatively, the insert 14 and the ferrule 18 may be formed from similar metals, i.e. insert formed from high strength steel and ferrule formed from steel.

For assembly, after forming the housing 22, the insert 14 and the ferrule 18, the steps of assembly include the following in sequential order:
(a) positioning the O-ring 16 on the collar portion 30 of the insert 14,
(b) inserting the barrel portion 32 of the insert 14 into one end of the flexible hose 20,
(c) inserting the collar portion 30 of the insert 14 into the housing 22 of the tube 12 by press fit,
(d) inserting the non-enlarged tubular section 26 of the tube 12 through the flange bore 46 until the chamfered section 24 of the tube 12 is seated in the chamfered section 52 of the flange bore 46, wherein the housing 22 and the collar portion 30 are positioned radially inward of the flange 42 and the barrel portion 32 is positioned radially inward of the sleeve 44, and
(e) crimping the sleeve 44 in a manner to create two radially inward ribs 54 that engage the hose 22.

In the fully assembled state, axial inward movement (as indicated by arrow A) of the insert 14 relative to the tube 12 is prevented by the abutment of the insert 14 against the inside surface of the chamfered section 24 of the tube 12. Axial inward movement of the tube 12 relative to the ferrule 18 is prevented by the abutment of the outer surface of the chamfered section 24 of the tube 12 against the chamfered section 52 of the bore 46. Axial inward movement and axial outward movement (as indicated by arrow B) of the hose 20 relative to the ferrule 18 is prevented by the ribs 54 of the sleeve 44 engaging the hose 20.

Alternatively, using the same components as previous described, the hose 20 may be installed after the insert 14 and the tube 12 have been inserted into the ferrule 18. The steps for this alternative method of assembly of the hose coupling 10 include the following in sequential order:
(a) positioning the O-ring 16 on the collar portion 30 of the insert 14,
(b) inserting the collar portion 30 of the insert 14 into the housing 22 of the tube 12 by press fit,
(c) inserting the non-enlarged tubular section 26 of the tube 12 through the flange bore 46 until the chamfered section 24 of the tube 12 is seated in the chamfered section 52 of the flange bore 46, wherein the housing 22 and the collar portion 30 are positioned radially inward of the flange 42 and the barrel portion 32 is positioned radially inward of the sleeve 44,
(d) positioning the flexible hose 20 between the sleeve 44 and the barrel portion 32 of the insert 14, and
(e) crimping the sleeve 44 in a manner to create two radially inward ribs 54 that engage the hose 22.

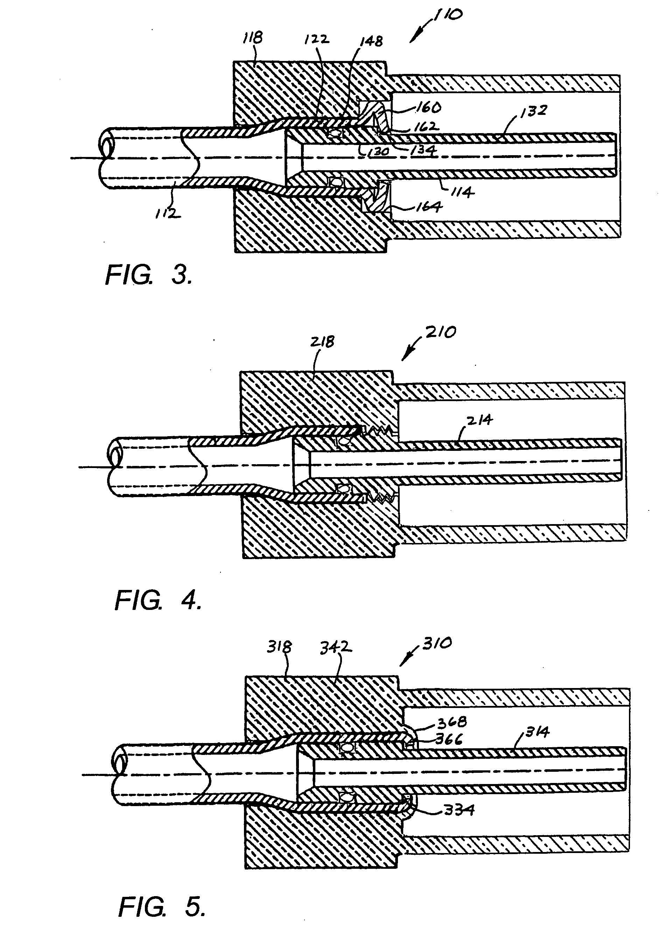

Figure 3 illustrates a first alternative embodiment of a hose coupling 110 in accordance to the present invention. The hose coupling 10 of the first alternative embodiment is similar to the hose coupling 10 of the first embodiment with the exception that the end of the housing 122 includes an upset 160. The terminal end 162 of the upset 160 extends radially inward beyond the collar portion 130, such that the shoulder 134 defining the junction of the collar portion 130 and the barrel portion 132 is in abutting relationship with the upset 160 preventing axially outward movement of the insert 114 relative to the tube 112. The ferrule 118 of the hose coupling 110 also includes a radially enlarged section 164, located axially outward of the large diameter cylindrical section 148, to accommodate the upset 160.

Figure 4 illustrates a second alternative embodiment of a hose coupling 210 in accordance to the present invention. The hose coupling 210 of the second alternative embodiment is similar to the hose coupling 10 of the first embodiment with the exception that the insert 214 is threaded to the ferrule 218 to prevent axial movement of the insert 214 relative to the ferrule 218.

Figure 5 illustrates a third alternative embodiment of a hose coupling 310 in accordance to the present invention. The hose coupling 310 of the third alternative embodiment is similar to the hose coupling 10 of the first embodiment with the exception of a tube rim 366 extending radially inward from the housing 322. The tube rim 366 surrounds the shoulder 334 of the insert 314 preventing axially outward movement of the insert 314 relative to the tube 312. A flange rim 368 extends axially outward and radially inward from the flange 342. The flange rim 368 surrounds the tube rim 366 preventing axially outward movement of the tube 312 relative to the ferrule 318.

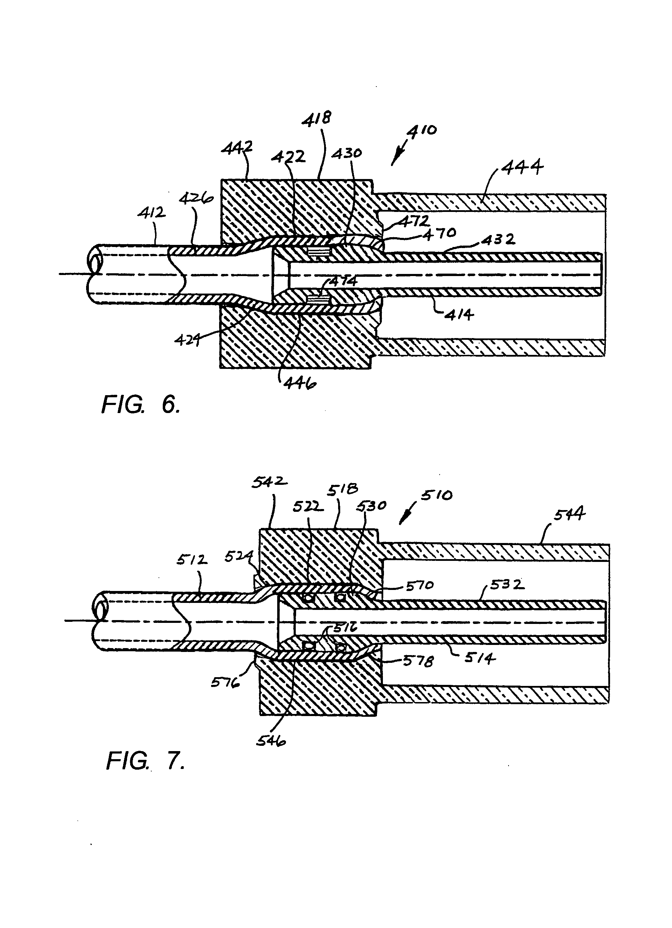

Figure 6 illustrates a fourth alternative embodiment of a hose coupling 410 in accordance to the present invention. The hose coupling 410 of the fourth alternative embodiment is similar to the hose coupling 10 of the first embodiment with one of the differences being the insert 414 having a tapered shoulder 470, rather than an annular shoulder, connecting the collar portion 430 to the barrel portion 432. The end of the housing 422 surrounds the tapered shoulder 470 to prevent axially outward movement of the insert 414 relative to the tube 412. The flange 442 includes a boss 472 that has been indented radially inward to surround the housing 422. The indented boss 472 prevents axially outward movement of the tube 412 relative to the ferrule 418. Another difference between the hose coupling 410 of the fourth alternative embodiment and the hose coupling 10 of the first embodiment is the use of a gasket or a thin strip of polymeric material 474, rather than an O-ring, as the sealing element. The thin strip of polymeric material 474 is described in U.S. Patent No. 6,688,653 to Thrift et al., which is assigned to the assignee of the present invention and the subject matter of which is hereby incorporated by reference. The steps of assembly of the hose coupling 410 of the fourth alternative embodiment include the following in sequential order:
(a) wrapping the strip of polymeric material 474 around the collar portion 430 of the insert 414 or positioning the gasket around the collar portion 430 of the insert 414,
(b) inserting the collar portion 430 of the insert 414 into the housing 422 of the tube 412,
(c) inserting the non-enlarged tubular section 426 of the tube 412 through the flange bore 446 until the chamfered section 424 of the tube 412 is seated in the chamfered section of the flange bore 446, wherein the housing 422 and the collar portion 430 are positioned radially inward of the flange 442 and the barrel portion 432 is positioned radially inward of the sleeve 444,
(d) applying a sufficient axially inward force on the boss 472 of the flange 442 to deform the boss 472 radially inward and simultaneously bending the end of the housing 422 radially inward to surround the tapered shoulder 470 of the insert 414,
(e) positioning the flexible hose (not shown) between the sleeve 444 and the barrel portion 432 of the insert 414, and
(f) crimping the sleeve 444 in a manner to create two radially inward ribs that engage the hose.

Figure 7 illustrates a fifth alternative embodiment of a hose coupling 510 in accordance to the present invention. The hose coupling 510 of the fifth alternative embodiment is similar to the hose coupling 10 of the first embodiment with one of the differences being the coupling 510 is adapted to allow the tube 512 to be inserted into the flange bore 546 from the end opposite the sleeve 544. The insert 514 has a tapered shoulder 570 connecting the collar portion 530 to the barrel portion 532. The end of the housing 522 surrounds the tapered shoulder 570 to prevent axially outward movement of the insert 514 relative to the tube 512. The flange includes a boss 576 at the end opposite the sleeve 544. The boss 576 has been indented radially inward to surround the chamfered section 524 of the tube 512. The indented boss 576 prevents axially inward movement of the tube 512 relative to the ferrule 518. Another difference between the hose coupling 510 of the fifth alternative embodiment and the hose coupling 10 of the first embodiment is the use of two O-rings 516 to seal the collar portion 530 and the housing 522. The steps of assembly of the hose coupling 510 of the fifth alternative embodiment include the following in sequential order:
(a) positioning the two O-rings 516 on the collar portion 530 of the insert 514,
(b) inserting the collar portion 530 of the insert 514 into the housing 522 of the tube 512,
(c) clamping the end of the housing 522 radially inward until the end of the housing 522 surrounds the tapered shoulder 570 of the insert 514,
(d) inserting the barrel portion 532 of the insert 514 through the flange bore 546 until the end of the housing 522 is seated in a chamfered surface 578 of the flange bore 546, wherein the housing 522 and the collar portion 530 are positioned radially inward of the flange 542 and the barrel portion 532 is positioned radially inward of the sleeve 544,
(e) applying a sufficient axially inward force on the boss 576 of the flange 542 to deform the boss 576 radially inwardly to surround the chamfered section 524 of the tube 512,
(f) positioning the flexible hose (not shown) between the sleeve 544 and the barrel portion 532 of the insert 514, and
(g) crimping the sleeve 544 in a manner to create two radially inward ribs that engage the hose.

Various features of the present invention have been described with reference to the embodiments shown and described. It should be understood, however, that modifications may be made without departing from the spirit and scope of the invention as represented by the following claims.

## Claims

1. A hose coupling comprising:
a metal tube having a radially enlarged cylindrical housing;
an insert having a collar portion and a barrel portion, said collar portion located radially inward of the cylindrical housing;
a ferrule having a flange and a sleeve; and
a flexible hose being held within the sleeve and supported on the barrel portion.

2. The hose coupling as claimed in claim 1 wherein said collar defines an annular groove.

3. The hose coupling as claimed in claim 2 further comprising an O-ring located in the annular groove.

4. The hose coupling as claimed in claim 1 wherein said sleeve defines a radially inward extending rib.

5. The hose coupling as claimed in claim 1 wherein the inner surface of said tube defines a chamfered surface preventing movement of said insert in one axial direction relative to the tube.

6. The hose coupling as claimed in claim 5 wherein the end of said housing extends radially inward preventing movement of said insert in the other axial direction relative to the tube.

7. The hose coupling as claimed in claim 1 wherein a section of the collar has a threaded outer surface.

8. The hose coupling as claimed in claim 1 wherein the insert and the ferrule are formed from dissimilar metals.

9. The hose coupling as claimed in claim 8 wherein the insert is formed from steel and the ferrule is formed from brass.

10. The hose coupling as claimed in claim 1 wherein the insert and the ferrule are formed from similar metals.

11. The hose coupling as claimed in claim 10 wherein the insert and the ferrule are formed from steel.

12. The hose coupling as claimed in claim 10 wherein the insert and the ferrule are formed from aluminum alloys.

13. A method of making a tube-to-hose coupling comprising the steps of:
a) providing an insert having a collar portion and a barrel portion;
b) providing a flexible hose;
c) inserting the barrel portion of the insert into one end of the flexible hose;
d) providing a metal tube having a radially enlarged cylindrical housing;
e) inserting said collar portion in said housing;
f) providing a ferrule having a flange and a sleeve, said flange has an axial bore extending therethrough;
g) inserting said tube through said flange bore until said housing and said collar portion is positioned radially inward of said flange and said barrel portion is positioned radially inward of said sleeve; and
h) crimping said sleeve radially inward.

14. The method as claimed in claim 13 wherein said collar portion defines an annular groove, said method further comprises the steps of providing a seal element and positioning said seal element in the annular groove of said collar portion.

15. A method of making a tube-to-hose coupling comprising the steps of:
a) providing a metal tube having a radially enlarged cylindrical housing;
b) providing an insert having a collar portion and a barrel portion;
c) inserting said collar portion in said housing;
d) providing a ferrule having a flange and a sleeve, said flange has an axial bore extending therethrough;
e) inserting said tube through said flange bore until said housing and said collar portion is positioned radially inward of said flange and said barrel portion is positioned radially inward of said sleeve;
f) providing a flexible hose;
g) positioning one end of said flexible hose between said sleeve and said barrel portion; and
h) crimping said sleeve radially inward.

16. The method as claimed in claim 15 wherein said collar portion defines an annular groove, said method further comprises the steps of providing a seal element and positioning said seal element in the annular groove of said collar portion.

17. The method as claimed in claim 16 wherein said flange has a boss surrounding an opening of said axial bore, said method further comprises the step of applying an axially inward force on the boss to deform the boss radially inward.

18. A method of making a tube-to-hose coupling comprising the steps of:
a) providing a metal tube having a radially enlarged cylindrical housing;
b) providing an insert having a collar portion and a barrel portion;
c) inserting said collar portion in said housing;
d) providing a ferrule having a flange and a sleeve, said flange has an axial bore extending therethrough;
e) inserting said tube through said flange bore from the end opposite the sleeve until said housing and said collar portion is positioned radially inward of said flange and said barrel portion is positioned radially inward of said sleeve;
f) providing a flexible hose;
g) positioning one end of said flexible hose between said sleeve and said barrel portion; and
h) crimping said sleeve radially inward.

19. The method as claimed in claim 17 wherein said collar portion defines an annular groove, said method further comprises the steps of providing a seal element and positioning said seal element in the annular groove of said collar portion.

20. The method as claimed in claim 19 wherein said flange has a boss surrounding an opening of said axial bore, said method further comprises the step of applying an axially inward force on the boss to deform the boss radially inward.
